# EUROPEAN PATENT APPLICATION

(11) **EP 2 012 239 A1**
(43) Date of publication of application: **07.01.2009**
(21) Application number: 07425390.7
(22) Date of filing: 22.06.2007
(51) Int. Cl.: G06F 17/30

(54) **Messaging interface system**

(71) Applicant: Accenture Global Services GmbH, 8200 Schaffhausen (CH)
(72) Inventor: Cesarini, Andrea, 00125 Acillia, Rome (IT); Clemenzi, Jacopo, 00142 Rome (IT); Garrano, Allessandro Cugno, 1-24020 Fiorano, Bergamo (IT)
(74) Representative: Müller-Boré & Partner Patentanwälte

(57) **Abstract**

A system is disclosed for serving a message from a centralized database to a catalog. A database message is parsed to create a catalog entity. The catalog entity transformed to a normalized object for a target system. The normalized object is transformed into a data structure for the target system. The data structure is written to the target system.

## Description

### TECHNICAL FIELD

Generally a system is disclosed for managing data offerings, such as for telecommunication and media service providers.

### BACKGROUND

Telecommunication providers may maintain information in catalogs regarding the products and services offered by or through the provider. The catalogs may be used to compile information that describes varying aspects of the products and the services. Configuration of the catalogs is often performed manually through a user interface for each application that may require the information.

### BRIEF SUMMARY

A system, computer-implemented method, and computer program product are disclosed for serving a message from a centralized database to a catalog. Catalogue entities are extracted from a centralized database and sent in the form of data messages to targeting systems, such as billing, customer relationship management, etc. These data messages, representing catalog entities, are received and parsed by a messaging interface system. Each entity is transformed by the messaging interface into a shared object representing an abstract, high level, description of the catalog item. The shared object is transformed into a normalized object, such as into a data structure representing the catalog item for the specific target system. The data structure is written to the target system.

Other systems, methods, tools, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

Fig. 1 is a block diagram of messaging interface system.

Fig. 2 is a block diagram of the adapter in more detail.

Fig. 3 is a flow chart of a logic of the system.

Fig. 4 is a table of exemplary component services for catalog entities.

Fig. 5 is a block diagram of an exemplary general computer system that may be used with to implement the messaging interface system.

### DETAILED DESCRIPTION

A messaging interface system is disclosed that may be used to automatically provide product and service catalog information to target systems. For purposes of explanation the target system is described as a billing system in the telecommunications industry, but the messaging interface may be used to provide information to other systems, such as customer relationship management (CRM), integrated order management (IOM), etc. The messaging interface systems may efficiently, flexibly, and reliably extend the functionality of a telecommunications service provider processing architecture to configure product and service catalog information into target systems, such as the billing systems. The messaging interface system may enable target systems to be fed by a source of data which may act as to centralize product and service catalog information. The messaging interface system may reduce difficulty, cost, and time expenditures that may otherwise be typically associated with manually entering new components into the architecture. The messaging interface system may also eliminate duplicative processing of events, as well as duplicative storage of information and duplicative communications among various telecommunication service provider processing systems, which may flow as a result of the additional processing.

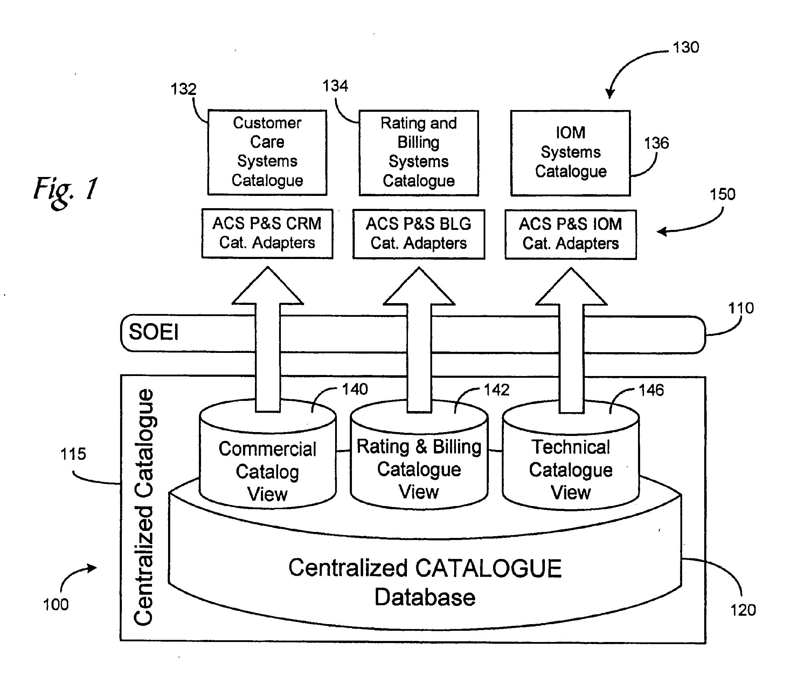

Fig. 1 is a block diagram of messaging interface system 100. The messaging interface system 100 may include a Service Oriented Enterprise Interface (SOEI) 110 to connect a centralized catalog 115 to system catalogs 130. The message interface 110 may be configurable and invoked remotely or locally to obtain data from the centralized catalog 115. The centralized catalog 115 may include a database 120. The database 120 may be centralized or distributed. The system catalogs 130 may include a customer care system catalog 132, a rating and billing system catalog 134, and an IOM system catalog 136, also referred to as target databases. The centralized catalog 115 may include a commercial catalog view 140 corresponding to the customer care systems catalog 132, a rating and billing catalog 142 corresponding to the rating and billing systems catalog 134, and a technical catalog view 146 related to an IOM system catalog 136.

Adapters 150 may be used to accommodate transfer of information from the different catalog views 140, 142 and 146 (e.g., an extract from the centralized catalog tailored for a specific system application domain) to the related system catalogs 132, 134, and 136. The adapters 150 may include a plurality of adapters, such as one for each catalog view 140, 142, 146. The adapters 150 may allow data of different formats to be shared by disparate parts of the system 100, such as by translating and/or converting the data. The adapters allow external applications, such as the centralized catalog 115, to interact with the different systems catalogs 132, 134, and 136 to upload and/or update system catalogs 132, 134, and 136 uniformly, such as with information from the centralized catalog 115. In such a way, the system 100 may provide for the aligning catalog mapping tables, used during subscription inventory entity processing, according to end-to-end catalog design updates.

The system 100 may be used to automate product and service catalog information to billing systems by composing, orchestrating and/or mapping the information to the data format as expected by the billing systems application programming interfaces (APIs). In doing this, the system 100 may help avoid the manual configuration of products and product attributes, services and service attributes, billing tariffs, rating tariffs, bundles, packages, contracts, promotions, discounts into a product and services catalog of the billing system. Additionally the system 100 may help avoiding the manual configuration of bundles and packages, e.g., composite offerings of multiple product and services that are sold together as result of a specific marketing offering. This may reduce the lead time to roll-out a new offering, and enable feeding data by an external source to accommodate the centralized catalog 115, such as of products and services. The centralized catalog 115 may then be located externally to a specific application systems or a spreadsheet containing the required information.

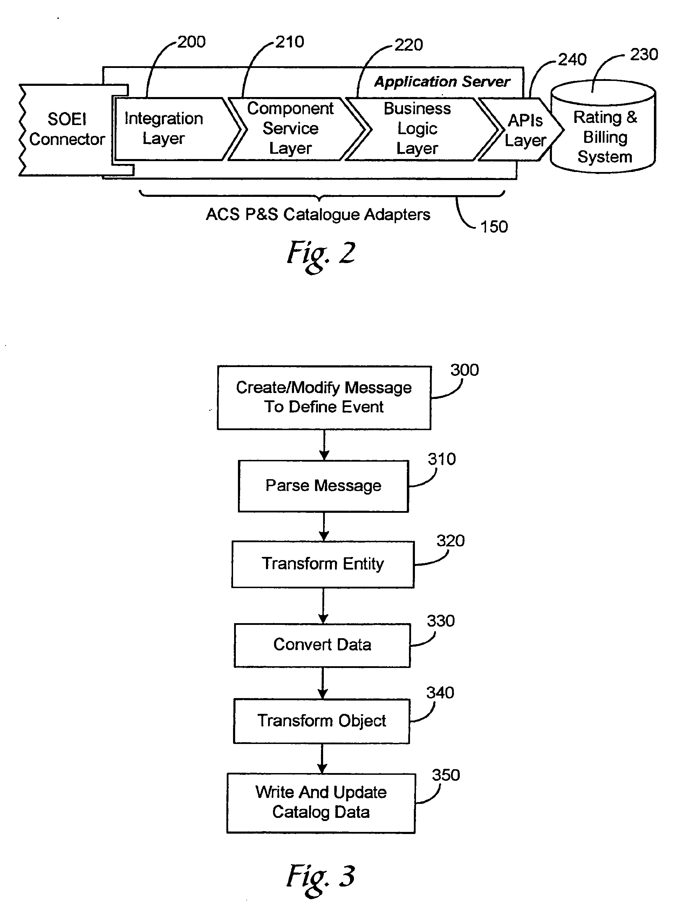

Fig. 2 is a block diagram of the adapter 150 in more detail. The adapters 150 may provide a set of component services and may be designed and built, for example, according to Service Oriented Architecture (SOA) principles. An SOA framework may provide patterns for design, development, deployment and management of a loosely coupled business application infrastructure. In this framework, business functionality may be published, discovered, and consumed as part of a business system of network and reusable technical and business services. In computing, the term SOA may express a perspective of software architecture that defines the use of loose coupled software services to support the requirements of the business processes and software users. In an SOA environment, resources on a network may be made available as independent services that can be accessed without knowledge of their underlying platform implementation. The services may be contract based and reusable.

The adapter 150 may include an integration layer 200, a component service layer 210 and a business logic layer 220. The adapter 150 may connect to a database of a rating and billing system 230, via an application programming interface (API) layer 240 or other access service. The integration layer 200 may receive and parse the data message, and transform the data message into a shared object. The component service 210 layer may transform the shared object into a normalized object. The business logic layer 220 may manage data in the normalized object and to perform logic to provide a data structure representative of the catalog entity for the target system. The API 240 may write the data structure to the second database of the target system.

The adapter 150 may leverage a web service technology, such as Web Services Description Language (WSDL). WSDL is an eXtensible Markup Language (XML) format for describing network services as a set of endpoints operating on messages containing either document-oriented or procedure-oriented information. The operations and messages may be described abstractly, and then bound to a concrete network protocol and message format to define an endpoint. Related concrete endpoints may be combined into abstract endpoints, e.g., services. WSDL may be extensible to allow description of endpoints and their messages regardless of what message formats or network protocols are used to communicate. It may consolidate earlier proposals in this area include Network Accessable Service Specification Language (NASSL), simple object access protocol (SOAP) Contract Language (SCL) and Service Description Language (SDL). SOAP requests, or request from another protocol for web service messages, may be used to connect the adapter 150 to back-end and legacy applications.

Fig. 3 is a flow chart of a logic of the system 100. The logic includes extracting catalog entities from a centralized database; sending the catalog entities to a messaging interface in the form of data messages; receiving and parsing the data messages by the messaging interface; transforming the data messages by the messaging interface into a shared object; transforming the shared object into a normalized object, wherein the normalized object includes a data structure representative of the catalog entity for the target system; and writing the data structure to the target system.

At block 300, the component service layer 210 may create and/or modify catalog entities. A message may define an event, such as a request for the creation of product and service catalog information. The information may include product description, product family, product attributes, billing tariff, rating tariffs, services, discounts, promotions and contracts in the billing system. In addition or alternatively, multiple messages may be used to define a single event, or a single message may defme multiple events.

The messaging interface system 100 may be implemented with one or more processors and memory. The processor and memory of the messaging interface system 100 may be implemented as an independent processing system, or in other ways, such as part of an existing system. For example, the messaging interface system 100 may be implemented as hardware, firmware and/or software integrated with a customer care management system, a billing system, or other systems in existing communications architectures. In addition or alternatively, the messaging interface may be implemented as an extension to a messaging protocol processing layer, e.g., a message adaptation layer or message transport layer, within or external to a customer care management system or billing system.

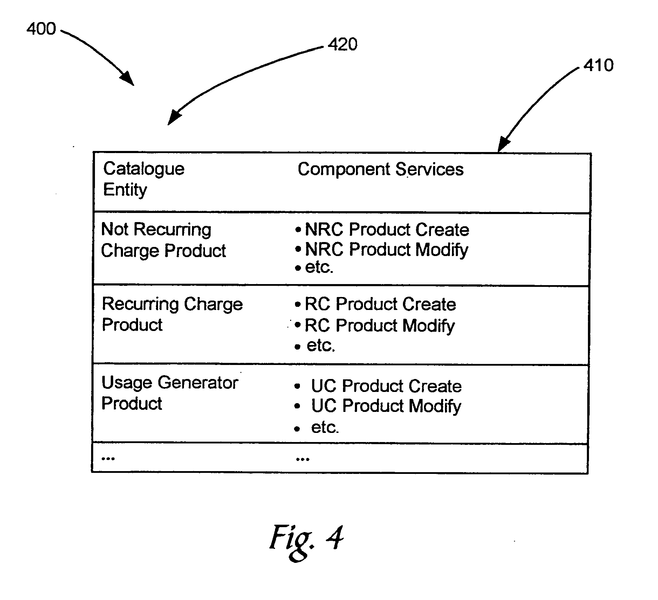

Referring again to Fig. 2, the integration layer 200, an event layer such as the component service layer 210, the logic layer 220, and an application programming interface (API) layer 240 of the messaging interface may separate certain functionalities of the interface. The layered and modular approach to the messaging interface system may provide custom business rules to be implemented without impacting the general application logic. The integration layer 200 may convert a message to a representation that conforms to a standard or common data model that is enforced across two or more of the systems and of the architecture. For example, the integration layer may be in charge of establishing and managing connection to target billing systems, e.g., web service, etc., and for exposing main business methods representing core functionalities, e.g. "Create Product Family", "Create Product", etc. The integration layer 200 may expose component services to external application through a standard communication protocol, such as SOAP. At block 310, the XML messages may be parsed to create a JAVA representation of the catalog entities. For example, the ACS "NRC Product Create" component service may be invoked for the parsing. Fig. 4 is a table 400 of exemplary component services 410 for catalog entities 420.

At block 320, the event or component service layer 210 may utilize functionality that transforms the standard or common data model representation into data types for use in a specific system of the architecture. For example, a component service layer may be in charge of making a proper data transformation by converting data from one format, such as Accenture Communications Solutions (ACS) Common Data Model (CDM) into a structure describing the specific entity in the target system, such as a target billing system. At block 330, the input data is converted using ACS tables. For example, "Currency", Tariff Name", etc. may be decoded.

The logic layer 220 may utilize logic for managing calls to system specific functions available through an API layer offered by a specific system of the architecture. The logic layer 220 may coordinate mapping of catalog entities to the target system. The logic layer 220 may invoke these functions to implement a message in the underlying support system of the architecture. For example, a business logic layer may be in charge of implementing specific functionalities as part of required main business logic. The core API may include the core billing system APIs implementing standard functionalities while ensuring overall data integrity and consistency. At block 340, the ACS normalized objects may be transformed into data structures that are input for native billing system API's. For example, a connection to the API may be opened and the input field list may be prepared for low level API. Thereafter, the native billing system API's may be called to process the business event. At block 350, the API layer 240 may write and update catalog data into the targeting billing system database, such as rating and billing system 230. For example, the API layer 240 may call "PCM_OP_PRICE_COMMIT_PRODUCT" OPCODE for an ORACLE CBRM system. Such an approach may ensure data integrity and consistency.

The messaging interface system 100 may be coupled with a product instance table for maintaining relationships between identifiers used to track products, services, and the like, in the various support systems of the architecture. The phrase "coupled with" may include direct connections to or indirect connected through one or more intermediate components. Such intermediate components may include both hardware, firmware and/or software based components. The layers and their respective functionalities, as well as the product instance table, are described in more detail below.

For explanation purposes, the target system is described as support systems which include the billing system. The billing system may include a processor, a memory, and a communication interface. The memory may store a billing program as well as a database in which the billing system stores various billing related information. Typically, the information may be stored in the billing system database according a data model associated with the billing system. The billing system may include hardware, firmware and software support logic which processes billing action requests. The support logic in the billing system may be implemented with commercially available billing software packages, such as Oracle^{™} for Communications Billing & Revenue Management ^{™}(a,k.a. Portal Infranet) billing package, Convergys Infynis^{™} (a.k.a. Geneva) billing package, Intec Singl.eView^{™}, Comverse Kenan FX^{™} billing package, Comverse CCBS^{™} billing package as well as with custom billing software.

In some implementations, the communication interfaces may be network sockets defined by IP addresses, port numbers, and communication protocols. The messages may travel between the systems according to a wide range of protocols and integration technologies, including BEA Aqualogic^{™}, BEA WLI^{™}, Tibco^{™} Rendezvous, Microsoft BizTalk^{™}, IBM MQseries^{™}, Vitria^{™}, Java Message Service protocol, SOAP, or HTTP. In other implementations, the systems can communicate via inter-process communication, messaging, and/or signaling.

As mentioned earlier, the adapters 150 may be provided between the external source of data which could act as a centralized product and service catalog and the message routing system, as well as between the messaging interface and the support systems. The adapters 150 may support transformation of the messages and/or message content from a format defined by one schema, e.g., a schema for messages to adhere to a specific billing system, to another format defined by another schema, e.g., a schema for messages to adhere to in the messaging interface and/or support systems.

In an implementation, the messages may contain data described by XML tags and the adapters perform transformation according to extensible Stylesheet Language for Transformations (XSLT) stylesheets. The transformations may transform data between schemas for any of XML, WSDL, extensible Scheme Diagram (XSD), as examples. The messages may move between systems using any kind of transportation or data access protocol, including HTTP, SOAP, or other protocols in place at the customer care management system, messaging interface, and/or support systems. The messages may represent the occurrence of or a request for an event to be processed by the support systems, such as the billing system.

The architecture may also support multiple different reply messages, such as a reply message for each supported event. Alternatively, or additionally, standard reply messages may be used to respond to multiple events. Any other messages or events may be used. The messaging interface may support various types of messages. For example, the interface may support messages that define products and product attributes, services and service attributes, billing tariffs, rating tariffs, bundles, packages, contracts, and promotions. Other types of supported messages may include discount related events for handling product level data, messages that define services related events for handling services level data, messages that define contracts related events for handling contracts level data, and messages that define promotions related events for handling promotions level data. Other messages include messages that define discounts related events for handling discounts level data, messages that define billing tariffs related events for handling billing tariffs level data, and messages that define rating tariffs related events for handling rating tariffs level data. The messaging interface may support other types of events representing additional catalogue items used to characterize an offering, e.g. free units, custom resources, etc.

The messaging interface may be used to automate company product and service catalog information, such as to billing systems, to help in automating the configuration of the product and services catalog. The messaging interface enables uploading automatically from a centralized catalogue the configuration onto the targeted customer relationship management, integrated order management and billing systems without requiring additional configuration time since impacts in the design and implementation are centralized. The messaging interface system may also enable a feed by an external source of data which could act as a centralized product and service catalog to specific application systems and/or a spreadsheets containing required information. The messaging interface system may enable an automatic configuration of product and services catalog on different billing system through a configurable message interface. The message interface may be invoked remotely to enable a provider, such as a telecommunication service provider, to have a normalized catalog whose management is centralized with a dedicated system.

The messaging interface system may provide a way by which external applications, as the centralized product and service catalog system, may interact with different billing systems to upload or update product and services catalog information according to the unified and centralized design. The messaging interface provides for an aligning of a catalog mapping table, e.g., used during subscription inventory entities processing, accordingly to the end-to-end catalog design updates. The message interface uploads from a centralized catalogue a products and services configuration onto different integrated business support systems (e.g. CRM, IOM, billing, etc.) that, as a result, can support the purchase of these offerings from an end-to-end perspective. When products and services are uploaded onto CRM, IOM, and billing it becomes possible to purchase these offerings from CRM and to spread this request on the integrated IOM and billing systems since the configuration of the offering is done based on an end-to-end centralized design avoiding configuration incompatibility. The business events managed by the messaging interface system may be designed to support large sets of functionalities exposed as web services, e.g. "Create Product Family", "Create Product", "Create Product Attributes", "Create Billing Tariffs", etc., for each of the catalog entities included in data models such as the ACS CDM, e.g. "Product Family", "Product", etc.

The messaging interface system may allow for a modular approach to allow capabilities enhancement, such as to exploit JAVA capabilities enabling an easy implementing of new business logics without affecting the general application logic. The layered architecture approach may maintain technology independence such that the tiered structure of the ACS Adapters may limit the technology dependence uniquely to the web service integration layer that can be easily replaced with minimal effort. A table driven configuration may be used to obtain maximum flexibility and easy maintenance. The tiered structure of the ACS Adapters are designed to have its logic fully configurable from a limited set of ACS custom oracle tables enabling highest available level of flexibility at the minimal configuration costs. Memory caching may be used to maximize performance of ACS custom tables used by the ACS Adapters. The memory may be cached at a web service level to obtain high performance while limiting multiple database concurrent accesses.

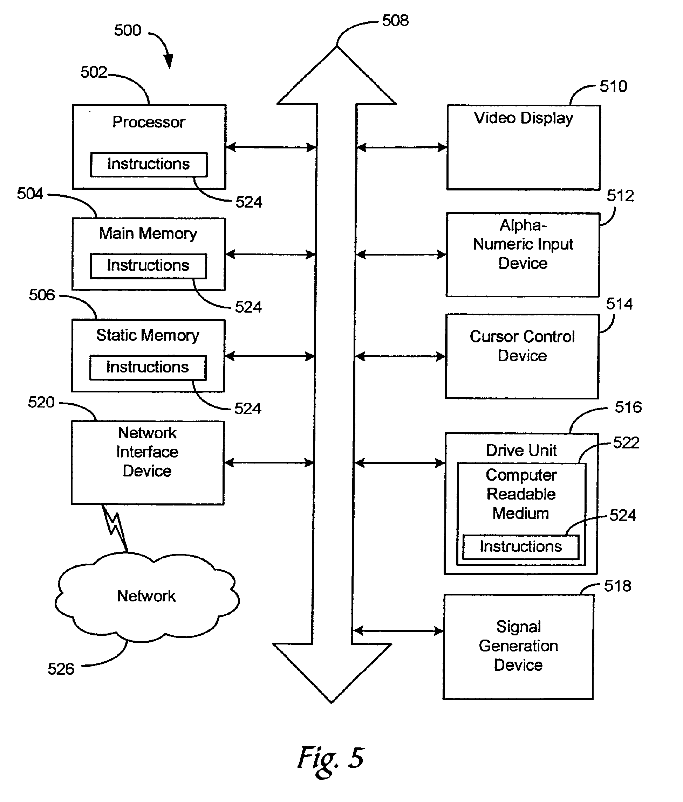

Fig. 5 is a block diagram of an exemplary general computer system 500 that may be used with to implement the messaging interface system 100. The computer system 500 may include a set of instructions that can be executed to cause the computer system 500 to perform any one or more of the methods or computer based functions disclosed herein. The computer system 500 may operate as a standalone device or may be connected, e.g., using a network, to other computer systems or peripheral devices. The tool may be implemented hardware, software or firmware, or any combination thereof. Alternative software implementations may be used including, but not limited to, distributed processing or component/object distributed processing, parallel processing, or virtual machine processing may also be constructed to implement the tools described herein.

In a networked deployment, the computer system 500 may operate in the capacity of a server or as a client user computer in a server-client user network environment, or as a peer computer system in a peer-to-peer (or distributed) network environment. The computer system 500 may also be implemented as or incorporated into various devices, such as a personal computer (PC), a tablet PC, a set-top box (STB), a personal digital assistant (PDA), a mobile device, a palmtop computer, a laptop computer, a desktop computer, a communications device, or any other machine capable of executing a set of instructions (sequential or otherwise) that specify actions to be taken by that machine. The computer system 500 may be implemented using electronic devices that provide voice, video or data communication. Further, while a single computer system 500 is illustrated, the term "system" shall also be taken to include any collection of systems or sub-systems that individually or jointly execute a set, or multiple sets, of instructions to perform one or more computer functions.

The computer system 500 may include a processor 502, e.g., a central processing unit (CPU), a graphics processing unit (GPU), or both. Moreover, the computer system 500 may include a main memory 504 and a static memory 506 that may communicate with each other via a bus 508. The computer system 500 may further include a video display unit 510, such as a liquid crystal display (LCD), an organic light emitting diode (OLED), a flat panel display, a solid state display, or a cathode ray tube (CRT). Additionally, the computer system 500 may include an input device 512, such as a keyboard, and a cursor control device 514, such as a mouse. The computer system 500 may also include a disk drive unit 516, a signal generation device 518, such as a speaker or remote control, and a network interface device 520.

The disk drive unit 516 may include a computer-readable medium 522 in which one or more sets of instructions 524, e.g. software, may be embedded. Further, the instructions 524 may embody one or more of the methods or logic as described herein. In a particular embodiment, the instructions 524 may reside completely, or at least partially, within the main memory 504, the static memory 506, and/or within the processor 502 during execution by the computer system 500. The main memory 504 and the processor 502 also may include computer-readable media.

Dedicated hardware implementations, such as application specific integrated circuits, programmable logic arrays and other hardware devices, may be constructed to implement one or more of the tools described herein. Applications that may include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit.

The present disclosure contemplates a computer-readable medium that includes instructions 524 or receives and executes instructions 524 responsive to a propagated signal, so that a device connected to a network 526 may communicate voice, video or data over the network 526. Further, the instructions 524 may be transmitted or received over the network 526 via the network interface device 520. While the computer-readable medium is shown to be a single medium, the term "computer-readable medium" includes a single medium or multiple media, such as a centralized or distributed database, and/or associated caches and servers that store one or more sets of instructions. The term "computer-readable medium" also includes any medium that is capable of storing, encoding or carrying a set of instructions for execution by a processor or that cause a computer system to perform any one or more of the methods or operations disclosed herein.

The computer-readable medium may include a solid-state memory such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is equivalent to a tangible storage medium.
Accordingly, the disclosure is considered to include any one or more of a computer-readable medium or a distribution medium and other equivalents and successor media, in which data or instructions may be stored.

While various embodiments of the invention have been described, it will be apparent to those of ordinary skill in the art that many more embodiments and implementations are possible within the scope of the invention. Accordingly, the invention is not to be restricted except in light of the attached claims and their equivalents. It should be understood that the computer-program product may be particularly embodied in a computer-readable storage medium (such as an information carrier) or as a signal or data stream.

## Claims

1. A computer-implemented method for serving a message to a target system, comprising:
extracting catalog entities from a centralized database;
sending the catalog entities to a messaging interface in the form of data messages;
receiving and parsing the data messages by the messaging interface;
transforming the data messages by the messaging interface into a shared object;
transforming the shared object into a normalized object, wherein the normalized object includes a data structure representative of the catalog entity for the target system; and
writing the data structure to the target system.

2. The method of claim 1, wherein the database messages comprise an XML messages.

3. The method of claim 1 or 2, wherein the parsing comprises creating a JAVA representation of the catalog entity.

4. The method of any one of the preceding claims, wherein the database messages are stored in a central catalog.

5. The method of any one of the preceding claims, wherein the target system comprises at least one of a customer care system catalog, a rating and billing system catalog, and an integrated order management system catalog.

6. The method of any one of the preceding claims, wherein the catalog entity comprises at least one of a product attribute, a service attribute, a billing tariff, a rating tariff, a contract, a promotion, and a discount.

7. The method of any one of the preceding claims, wherein the parsing is performed by an integration layer.

8. The method of claim 7, wherein the integration layer further establishes a connection with the target system.

9. The method of any one of the preceding claims, wherein transforming the catalog entity is performed by a component service layer.

10. The method of any one of the preceding claims, wherein transforming the normalized object is performed by a business logic layer.

11. The method of any one of the preceding claims, wherein writing the data structure is performed by an application programming interface layer.

12. A computer system for serving a message to a target system, comprising:
a first database for storing a central catalog containing catalog entities, wherein the catalog entities from the central catalog are sent in the form of a data message;
a second database for storing data structures of the target system; and
an adapter for managing data offerings from the first database to the second database, the adapter including:
an integration layer to receive and parse the data message, and transform the data message into a shared object;
a component service layer to transform the shared object into a normalized object;
a logic layer to manage data in the normalized object and to perform logic to provide a data structure representative of the catalog entity for the target system; and
an application programming interface layer to write the data structure to the second database of the target system.

13. The system of claim 12, wherein the data message comprises an XML message.

14. The system of claim 12 or 13, wherein the target system comprises at least one of a customer care system catalog, a rating and billing system catalog, and an IOM system catalog.

15. The system of any one of claims 12 to 14, wherein the catalog entity comprises at least one of a product attribute, a service attribute, a billing tariff, a rating tariff, a contract, a promotion, and a discount.

16. The system of any one of claims 12 to 15, wherein the logic layer comprises a business logic layer.

17. The system of any one of claims 12 to 16, wherein the central catalog comprises a commercial catalog view, a rating and billing catalog view, a technical catalog view, and a catalog database.

18. The system of claim 17, wherein the adapter comprises a plurality of adapters, one for each catalog view.

19. The system of any one of claims 12 to 18, wherein the logic layer manages calls to system specific functions available through the application programming interface layer offered by the target system.

20. The system of any one of claims 12 to 19, wherein the logic layer maps the catalog entities to the target system.

21. A computer program product comprising computer readable instructions, which when loaded and run in a computer system and/or computer network system, causes the computer system and/or the computer network system to perform operations according to a method of any one of claims 1 to 11.
